(19)

Europäisches
Patentamt
European
Patent Office
Office européen
des brevets

(11) **EP 2 161 936 A1**

(12) **EUROPEAN PATENT APPLICATION**

(43) Date of publication:
**10.03.2010 Bulletin 2010/10**

(51) Int Cl.:
***H04N 7/26*** *(2006.01)*     ***H04N 7/50*** *(2006.01)*

(21) Application number: **08015661.5**

(22) Date of filing: **04.09.2008**

| | |
|---|---|
| (84) Designated Contracting States:<br>**AT BE BG CH CY CZ DE DK EE ES FI FR GB GR**<br>**HR HU IE IS IT LI LT LU LV MC MT NL NO PL PT**<br>**RO SE SI SK TR**<br>Designated Extension States:<br>**AL BA MK RS** | • **Wittmann, Steffen**<br>  **63225 Langen (DE)**<br>• **Wedi, Thomas**<br>  **63225 Langen (DE)**<br>• **Shibahara, Youji**<br>  **Osaka 540-6207 (JP)** |
| (71) Applicant: **Panasonic Corporation**<br>**Kadoma-shi**<br>**Osaka 571-8501 (JP)** | (74) Representative: **Grünecker, Kinkeldey,**<br>**Stockmair & Schwanhäusser**<br>**Anwaltssozietät**<br>**Leopoldstrasse 4**<br>**80802 München (DE)** |
| (72) Inventors:<br>• **Narroschke, Matthias**<br>  **63225 Langen (DE)** | |

(54) **Locally adaptive filters for video coding controlled by local correlation data**

(57)    During video encoding and/or video decoding, several different filtering steps are typically performed. An adaptive filter design allows adapting the filter coefficients on various contents of the video sequences. Decoder side has no access to the original video signal before being encoded. It is thus an advantage to signalize side information enabling adaptive design of the filter at the decoder. Present invention provides methods and apparatuses for both encoding and decoding of a video signal with locally adaptive filtering controlled by local correlation information. Accordingly, a first correlation data that can be derived only on the encoder side is estimated and provided to a decoder side. At the decoder side, in addition a second correlation data is estimated. Both the first and the second correlation data are then used to calculate filter coefficients. Hereby, the estimation of the second correlation data is performed locally for an image area, being a part of a video frame. Such locally adaptive filtering enables adapting to non-stationary characteristics of images of a video signal.

# Fig. 5A

**(Cont. next page)**

# Fig. 5B

**Description**

The present invention relates to a method and an apparatus for video encoding and decoding using adaptive filters for filtering of video signals.

BACKGROUND OF THE INVENTION

At present, the majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16x16 pixels) is the basic image element, for which the encoding is performed. However, various particular encoding steps may be performed for smaller image elements, denoted blocks or subblocks and having the size of, for instance, 8x8, 4x4, 16x8, etc.

Typically, the encoding steps of a hybrid video coding include a spatial and/or a temporal prediction. Accordingly, each block to be encoded is first predicted using either the blocks in its spatial neighbourhood or blocks from its temporal neighbourhood, i.e. from previously encoded video frames. A block of differences between the block to be encoded and its prediction, also called prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

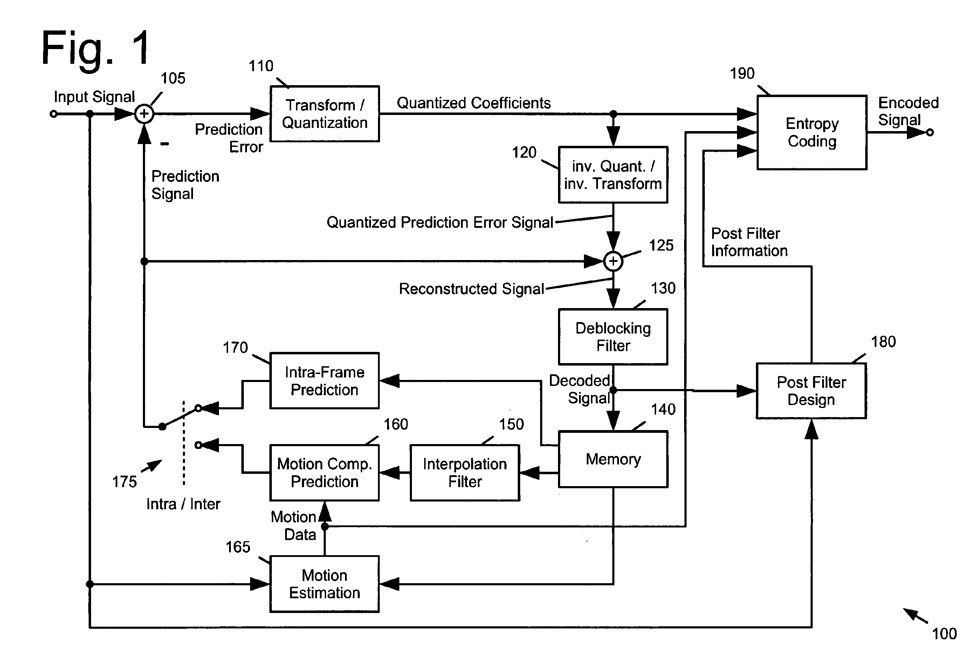

Figure 1 is an example of a typical H.264/AVC standard compliant video encoder 100. The H.264/AVC standard combines all above mentioned encoding steps. A subtractor 105 first determines differences between a current block (block to be encoded) of a video image (input signal) and a corresponding predicted block (prediction signal). A temporally predicted block is a block from the previously encoded image which is stored in a memory 140. A spatially predicted block is interpolated from the values of boundary pixels in the neigbouring blocks which have been previously encoded and stored in the memory 140. The memory unit 140 thus operates a delay unit that allows a comparison between current signal values and the prediction signal generated from previous signal values. The memory 140 can store a plurality of previously encoded video frames. The difference between the input signal and the prediction signal, denoted prediction error or residual, is then transformed and quantized 110. Entropy encoder 190 is then applied to the quantized coefficients in order to further reduce the amount of data in a lossless way. This is achieved by applying a code with code words of variable length wherein the length of a code word is chosen based on the probability of occurrence thereof.

The H.264/AVC includes two functional layers, a Video Coding Layer (VCL) and a Network Abstraction Layer (NAL). The VCL provides the encoding functionality as briefly described above. The NAL encapsulates the encoded video data together with the side information necessary for the decoding thereof into standardized units called NAL units according to their further application (transmission over a channel, storing in storage). There are VCL NAL units containing the compressed video data and the related information, as well as non-VCL units encapsulating additional data such as parameter set relating to an entire video sequence, or recently added Supplemental Enhancement Information (SEI) providing additional information that can be use to improve the decoding performance such as post filter hint.

Within the video encoder 100, a decoding unit is incorporated for obtaining a decoded video signal. In compliance with the encoding steps, the decoding steps include inverse quantization and inverse transformation 120. The decoded prediction error signal differs from the original input signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the decoded prediction error signal. The video signal after deblocking is the decoded signal which is generally displayed at the decoder side (if no post filtering is applied). The deblocking filter in H.264 /AVC has the capability of local adaptation. In the case of a high degree of blocking noise, a strong (narrow-band) low pass filter is applied, whereas for a low degree of blocking noise, a weaker (broad-band) low pass filter is applied. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency. The decoded signal is then stored in the memory 140.

The prediction signal in H.264/AVC is obtained either by a temporal or by a spatial prediction. The type of prediction can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames. The term "intra" refers to the spatial prediction, which only uses the already encoded information within the current video frame. The type of prediction for a video frame can be set by the user or selected by the video encoder so as to achieve a possibly high compression gain. In accordance with the selected type of prediction, an intra/inter switch 175 provides corresponding prediction signal to the subtractor 105.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

Intra-fame prediction uses a predefined set of intra-prediction modes which basically predict the current macroblock using the boundary pixels of the neighboring macroblocks already encoded. The different types of spatial prediction refer to a different edge direction, i.e. the direction of the applied two-dimensional interpolation. The prediction signal obtained by such interpolation is then subtracted from the input signal by the subtractor 105 as described above. In addition, spatial prediction type information is entropy encoded and signalized together with the encoded video signal.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I- type macroblocks. An inter-encoded macroblock (P- or B- macroblock) is predicted by employing motion compensated prediction 160. First, a best-matching block is found for the current block within a previously encoded and decoded video frame by a motion estimator 165. The best-matching block then becomes a prediction signal and the relative displacement (motion) between the current block and its best match is then signalized as motion data in the form of two-dimensional motion vectors within the side information provided together with the encoded video data. In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position. Hence, spatial interpolation of such pixel values is needed in order to perform motion compensation. This is achieved by interpolation filter 150. According to the H.264/AVC standard, a six-tap Wiener interpolation filter with fixed filter coefficients and a bilinear filter are applied in order to obtain pixel values for sub-pixel positions.

For both the intra- and the inter-encoding modes, the differences between the current input signal and the prediction signal are transformed and quantized by transform quantization unit 110 , resulting in the quantized transform coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. After quantization, the two-dimensional matrix of quantized coefficients is converted into a one-dimensional array to pass the entropy encoder. Typically, this conversion is performed by so-called zig-zag scanning, which starts in the upper left corner of the two-dimensional array and scans the two-dimensional array in a predetermined sequence ending the lower right corner. As the energy is typically concentrated in the left upper part of the image, corresponding to the lower frequencies, the zig-zag scanning results in an array where usually the last values are zero. This allows for efficient encoding using run-length codes as a part of/before the actual entropy coding.

In order to improve the image quality, a so-called post filter 280 may be applied at the decoder side 200. The H.264/AVC standard allows the sending of post filter information for such a post filter via Supplemental Enhancement Information (SEI) message. The post filter information is determined at the encoder side by means of a post filter design unit 180, which compares the locally decoded signal and original input signal. The output of the post filter design unit 180 is also fed to the entropy coding unit 190 in order to be encoded and inserted into the encoded signal. The entropy coding unit 190 employs different variable length codes for different type of information to be encoded in order to adapt to the statistic thereof.

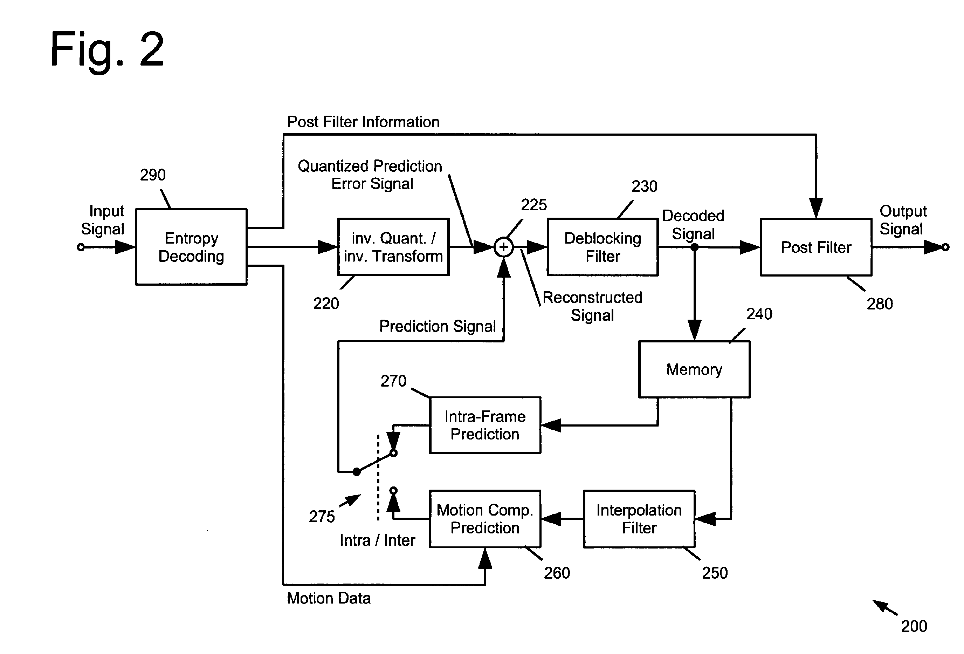

Figure 2 illustrates an example decoder 200 compliant with the H.264/AVC video coding standard. The encoded video signal (input signal to the decoder) first passes to entropy decoder 290, which decodes the quantized coefficients, the information elements necessary for decoding such as motion data, type of prediction etc., and the post filter information. The quantized coefficients are inversely scanned in order to obtain a two-dimensional matrix which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder. The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250.

The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder on a per-frame basis.

In summary, there are three types of filter used in the latest standard H.264/AVC: an interpolation filter, a deblocking filter and a post filter. In general, the suitability of a filter depends on the image to be filtered. Therefore, a filter design capable of adapting the image characteristics is advantageous. The coefficients of such a filter may be designed as Wiener filter coefficients.

The latest standard H.264/AVC applies a separable and fixed interpolation filter. However, there are proposals to replace the separable and fixed interpolation filter by an adaptive one either separable or non-separable, such as, for instance, S. Wittmann, T. Wedi, "Separable adaptive interpolation filter", ITU-T Q.6/SG16, doc. T05-SG 16-C-0219, Geneva, Switzerland, June 2007. The current H.264/AVC standard furthermore allows the usage of an adaptive post filter. For this purpose, a post filter is estimated at the encoder for each image by a post filter design unit 180 as described above. The post filter design unit generates filter information (a so-called post filter hint), which is transmitted to the decoder in the form of an SEI message. At the decoder, the filter information may be used by a post filter which is applied on the decoded signal before displaying. Filter information that is transmitted from the encoder to the decoder can either be filter coefficients or a cross correlation vector. Transmitting such side information may improve the quality of filtering, but, on the other hand, requires additional bandwidth. Using the transmitted or calculated filter coefficients, the entire image is post filtered. The deblocking filter in H.264/AVC is used as a loop filter to reduce blocking artifacts at block edges. All three types of filter may be estimated as a Wiener filter.

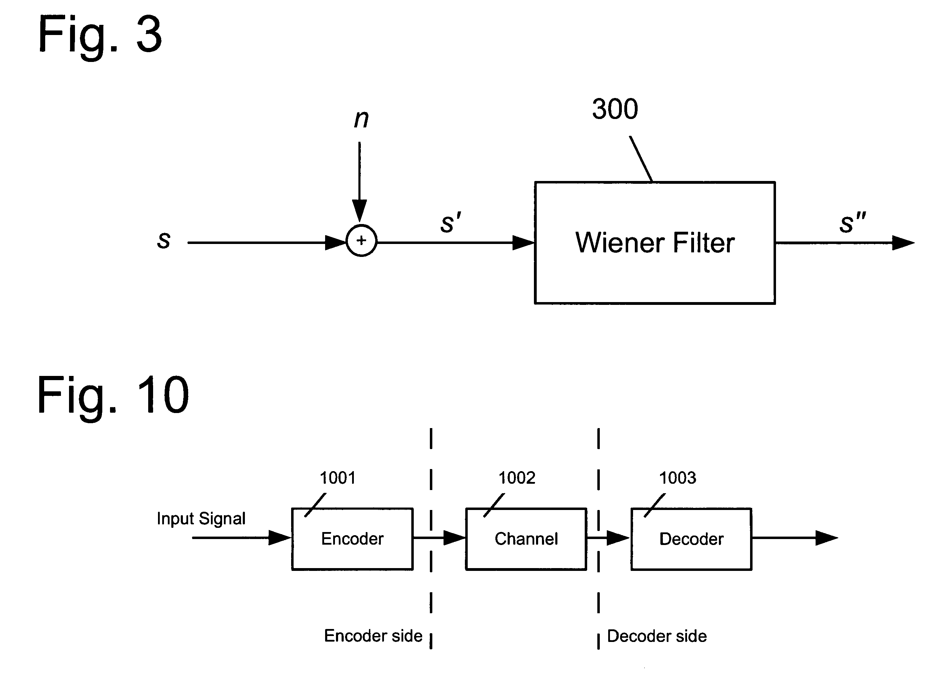

Figure 3 illustrates a signal flow using a Wiener filter 300 for noise reduction. To an input signal $s$, noise n is added, resulting in a noisy signal $s'$ to be filtered. With the goal of reducing the noise $n$, a Wiener filter is applied to the signal $s'$, resulting in the filtered signal $s''$. The Wiener filter 300 is designed to minimize the mean square error between the input signal $s$, which is a desired signal, and the filtered signal $s''$. This means that Wiener filter coefficients $w$ correspond to the solution of optimization problem $\arg_w \min E[(s-s'')^2]$ which can be formulated as a system of linear equations called Wiener-Hopf equations. The solution is given by:

$$w = R^{-1} \cdot p\,,$$

where $w$ is an $M \times 1$ vector containing the optimal coefficients of Wiener filter having order $M$, $M$ being a positive integer, $R^{-1}$ denotes the inverse of an $M \times M$ autocorrelation matrix $R$ of the noisy signal $s'$ to be filtered, and $p$ denotes an $M \times 1$ cross correlation vector between the noisy signal $s'$ to be filtered and the original signal $s$. Further details on adaptive filter design can be found in S. Haykin, "Adaptive Filter Theory", Fourth Edition, Prentice Hall Information and System Sciences Series, Prentice Hall, 2002, which is incorporated herein by reference.

Thus, one of the advantages of the Wiener filter 300 is that the filter coefficients can be determined from the autocorrelation of the corrupted (noisy) signal and the cross correlation of the corrupted signal and the desired signal. As the filter coefficients are used to filter the image or a sequence of images, it is implicitly assumed that the image signal is at least wide-sense stationary, i.e. its first two statistic moments (mean, correlation) does not change in time.

By applying such a filter on a non-stationary signal, its performance decreases considerably. Natural video sequences are in general not stationary. The images of a video sequence are in general also not stationary. Thus, quality of the filtered non-stationary images is reduced.

SUMMARY OF THE INVENTION

The aim of the present invention is to provide an encoding and decoding mechanism with adaptive filtering for video signals, capable of adapting to the local characteristics of the image and efficient in terms of coding gain.

This is achieved by the features as set forth in the independent claims.

Preferred embodiments are the subject matter of the dependent claims.

It is a particular approach of the present invention to design a filter for filtering of a decoded video signal at an encoder and/or in a decoder in a locally adaptive manner. An image area is first determined in a video signal and filter coefficients are calculated based on statistic information such as correlation. A first portion of the correlation information is related to a video signal before encoding and to a decoded video signal and is thus determined at the encoder side and provided to the decoder side. A second portion of the correlation information is related to the decoded video signal and is estimated at the encoder and/or decoder locally, i.e., per image area.

Such approach provides adaptability of the filter to local characteristics of a video image (frame) and thus improves the resulting image quality. Moreover, signaling overhead may be reduced by estimating a local portion of the statistic information at the decoder side.

According to a first aspect of the present invention, a method for encoding an input video signal including at least one video frame is provided. An input video signal is encoded and the encoded video signal is decoded. In a video frame of the decoded video signal, an image area is determined. Next, first correlation information is determined based on the input video signal and the decoded video signal, the first correlation information being for calculating filter coefficients. Second correlation data are estimated for said image area based on the decoded video signal. The first correlation information is then provided to a decoder side and filter coefficients for filtering of the image area are derived, the filter coefficients being calculated based on the first correlation information and on the second correlation information. The image area is filtered using the filter coefficients calculated.

According to a further aspect of the present invention, a method for decoding an encoded video signal including at least one video frame is provided. An encoded video signal is decoded and first correlation information is obtained, the first correlation information being determined at the encoder side based on the video signal processed by the encoder. An image area in a video frame of the decoded video signal is derived and second correlation information for said determined image area is estimated based on the decoded video signal. The determined image area is filtered, filter coefficients for the filtering of the determined image area are calculated based on the first correlation information and on the second correlation information.

According to a further aspect of the present invention, an apparatus for encoding an input video signal including at least one video frame is provided. The apparatus comprises a video encoder for encoding an input video signal, a video decoder for decoding the encoded video signal, a first estimator for determining first correlation information based on the input video signal and the decoded video signal for calculating filter coefficients. The apparatus is capable of providing the first correlation information to a decoder side. Further comprised therein is an image area forming unit for determining an image area in a video frame of the video signal; a second estimator for estimating second correlation information for said image area based on the decoded video signal, a filter for filtering the image area, and a coefficient calculating unit for calculating filter coefficients based on the first correlation information and on the second correlation information.

According to a further aspect of the present invention, an apparatus for decoding an encoded video signal including at least one video frame is provided. The apparatus comprises a video decoder for decoding an encoded video signal and is capable of obtaining first correlation information determined at the encoder side based on the video signal processed by the encoder. Further comprised is an image area forming unit for determining an image area in a video frame of the video signal, an estimator for estimating second correlation information for said image area based on the decoded video signal, a filter for filtering the image area, and a coefficient calculating unit for calculating filter coefficients based on the first correlation information and on the second correlation information.

In an embodiment of the present invention, the first correlation information includes an estimate of a second statistic moment such as a cross correlation vector between the input video signal and the decoded video signal. This information may be advantageously used for calculating filter coefficients. The decoded video signal is a video signal after any of the decoding steps such as, for instance, inverse quantization, inverse transformation, obtaining the reconstructed video signal by summing up residuals and prediction signal, filtering, etc.

The encoded video signal is in general a sum of the input video signal and the noise causing degradation of the input signal. Such noise may be caused by encoding steps. Correspondingly, the cross correlation vector may be separated in parts, including, for instance, a part related to the encoded video signal only and a part related to a noise signal only, or a part related to both. In a preferred embodiment of the present invention, the first correlation information includes an estimate of a part of the cross correlation vector between the input video signal and the decoded video signal. Preferably, the part of cross correlation vector related to a noise signal (difference between the video signal prior to encoding, i.e. input to the video encoder, and the decoded video signal) is provided, since this information cannot be derived at the decoder side. This noise signal may be, for instance, a quantization noise caused by quantization of the video signal in one of the encoding steps. The first correlation information may be the auto correlation of the quantization noise. Preferably, the second correlation information includes the part of the cross correlation vector that can be estimated at the decoder side, thus related to the decoded video signal only. Preferably, the second correlation information includes an autocorrelation matrix of the decoded video signal.

The knowledge of the autocorrelation matrix of the decoded video signal and the cross correlation vector between the input video signal and the corresponding decoded video signal allows calculating the filter coefficients. In accordance with a preferred embodiment of the present invention, the filter coefficients are calculated in accordance with a Wiener filter design, i.e. as a product of the inverse autocorrelation matrix and the cross correlation vector.

The filter can be applied after any of the decoding steps. Preferably, the filtering is performed in the spatial domain on the reconstructed video signal. However, in case of a hybrid video coding, the filtering may be applied, for instance, to decoded residuals (prediction error signal), to a reconstructed video signal after summing up the residuals and the prediction signal, or to a filtered reconstructed video signal.

Preferably, the first correlation data is provided for a video frame, while the second statistic information is estimated locally, i.e. per image area. Alternatively, the first correlation information may also be estimated and provided per image area. Providing the first correlation data for an image area allows for more precise calculation of the filter coefficients and thus leads to improved quality of image after filtering especially for the cases with non stationary relation between the input video signal and noise. However, it also increases the bandwidth necessary for transmission of the encoded video data and thus reduces the coding efficiency. Other solutions for estimating and providing the first correlation information are possible, such as providing the first information for more image areas within one or a plurality of video frames.

In accordance with another preferred embodiment of the present invention, the image area is determined based on information signalized together with the video signal within the encoded video data, for instance, type of prediction, spatial prediction type, motion vectors, quantization step, etc. Deriving the image area from the generically signalized information requires low complexity, and can be performed in the same manner at the encoder and decoder. Consequently, no additional signaling information is necessary. Alternatively, the image area can be derived based on information determined from the decoded video signal. For example, predefined values of the autocorrelation matrix of the encoded video signal or any function of the autocorrelation matrix values may be used. Such deriving of the image area may be more flexible than relying on the signalized information and may better suit the desired application, namely, determining the image areas with similar statistical characteristics. However, the image area may also be arbitrarily determined at the encoder, and the information describing the image area may be provided together with the second statistic information to the decoder side. Based on this information, the decoder derives the image area. Such approach of deriving the image area provides the highest flexibility.

Preferably, the image area comprises one or more image elements such as blocks or macroblocks used at different stages of video encoding. However, the image area may be independent of the image segmentation performed by the video encoder and decoder in various steps of encoding and decoding, respectively. The size and shape of the image area depends also on the manner in which the image area is derived.

In a preferred embodiment of the present invention, the filter coefficients of at least one of a loop filter, a post filter, an interpolation filter, or a deblocking filter are calculated based on the first and the second correlation data. In general, such locally adaptive filter according to the present invention may be a loop filter, meaning that its result is stored in a memory and may be used in further encoding steps such as prediction or a post filter applied to the reconstructed signal after decoding.

The first correlation information is provided/obtained by storing in/extracting from a storage or by transmitting/receiving over a transmission channel together with the encoded video signal within the encoded video data. In particular, the first statistic information can be entropy encoded in order to reduce the bandwidth necessary for its storing or transmitting. Any other encoding may also be used, including forward error protection.

In accordance with a preferred embodiment of the present invention, the video signal is encoded and decoded based on the H.264/AVC standard. In particular, the first correlation data is provided within the Supplemental Enhancement Information (SEI) message. However, the present invention is applicable to any other video encoding and decoding standard using filtering. For instance, any standardized encoding and decoding methods based on hybrid coding can be used, such as MPEG-X, H.26X, JPEG 2000, Dirac or their enhancements as well as non-standardized (proprietary) encoding and decoding methods.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising the encoder as described above, a channel for storing or transmitting the encoded video signal, and the decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings in which:

Figure 1      is a block diagram of a conventional video encoder;

Figure 2      is a block diagram of a conventional video decoder;

Figure 3      is a schematic drawing illustrating Wiener filter design;

Figure 4A      is a schematic drawing illustrating example of image segmentation into blocks before encoding;

Figure 4B      is a schematic drawing illustrating example image areas of different sizes and shapes in accordance with the present invention;

Figure 5A      is a block diagram of video encoding in accordance with the present invention;

Figure 5B      is a block diagram of video decoding in accordance with the present invention;

Figure 6      is a block diagram of a video encoder with a loop filter according to an embodiment of the present invention;

Figure 7      is a block diagram of a video decoder with a post filter according to an embodiment of the present invention;

Figure 8      is a block diagram of a video encoder with an interpolation filter according to another embodiment of the present invention;

Figure 9      is a block diagram of a video decoder with an interpolation filter according to another embodiment of the present invention; and

Figure 10      is a schematic drawing of a system with an encoder and a decoder in accordance with the present invention;

DETAILED DESCRIPTION

The problem underlying the present invention is based on observation that images of a video sequence, in particular of a natural video sequence, are non-stationary, i.e. their statistics vary. Therefore, applying same filter to an entire image may result in a suboptimal performance in terms of reconstruction quality.

In order to solve this problem, the present invention provides a method for encoding, a method for decoding, an apparatus for encoding and an apparatus for decoding of a video signal, as well as a system for transferring encoded video signal from encoder side to decoder side. Accordingly, filtering is performed in a locally adaptive manner, controlled by correlation data estimated for an image area which forms a part of a video frame, the correlation data being based on a decoded video signal. In addition, for calculating the filter coefficients, correlation data determined at encoder side are used, based on the decoded video signal and on a video signal only available at the encoder side. This correlation data is provided to the decoder side. The degree of local adaptability and the image quality after filtering depend on the size and shape of the image area(s) for which the filtering is performed as well as on the way the image area is determined.

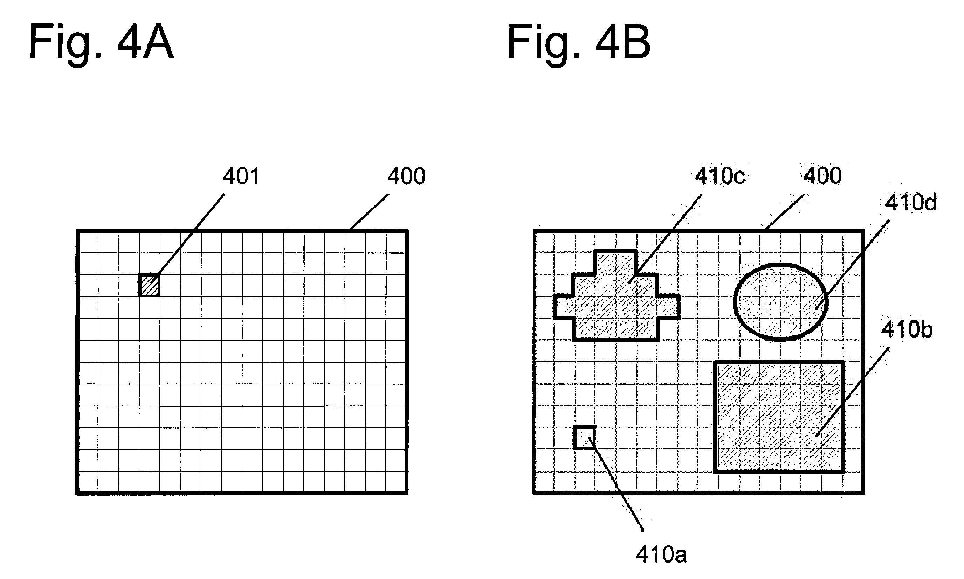

Figure 4A illustrates segmentation of a video frame 400 into a plurality of blocks 401, which is typically performed before encoding. In case of H.264/AVC coding, the image is segmented to a plurality of 16 x 16 mackroblocks, which are further segmented to subblocks of 4 x 4 or 8x 8 pixels for the transformation, or to subblocks of 4 x 4, 8 x 8, 16 x 8, etc. for the temporal prediction.

Figure 4B illustrates four examples of an image area 410 in accordance with the present invention. An image area here refers to a part of a video frame (image). In general, such image area may align to the underlying segmentation to image elements performed in one of the encoding steps as illustrated in Figure 4A. Thus, an example image area 410a corresponds to a macroblock, or to a block used in one of the standardized encoding steps. Another example image area 410b consists of several macroblocks or blocks organized in a rectangular shape. A further example image area 410c includes a plurality of blocks or macroblocks organized in an arbitrary shape. The image area may also correspond to a slice if slicing is applied at the encoder such as, for instance, in H.264/AVC standard. A yet further example image area 410d has an arbitrary shape, which is not necessarily aligned to the underlying image segmentation performed by the encoder, consisting of a plurality of image samples or pixels. An image area may also be formed by a single image pixel (the basic image element). The illustrated example image areas 410a, 410b, 410c and 410d are all continuous, meaning that each pixel has at least one neighbour from the same image area. However, present invention is also applicable to image areas which are not continuous. The suitability of particular shapes and sizes of image areas in context of the present invention is given by the content of the video frame and the manner in which the determining of an image area is performed as described later on.

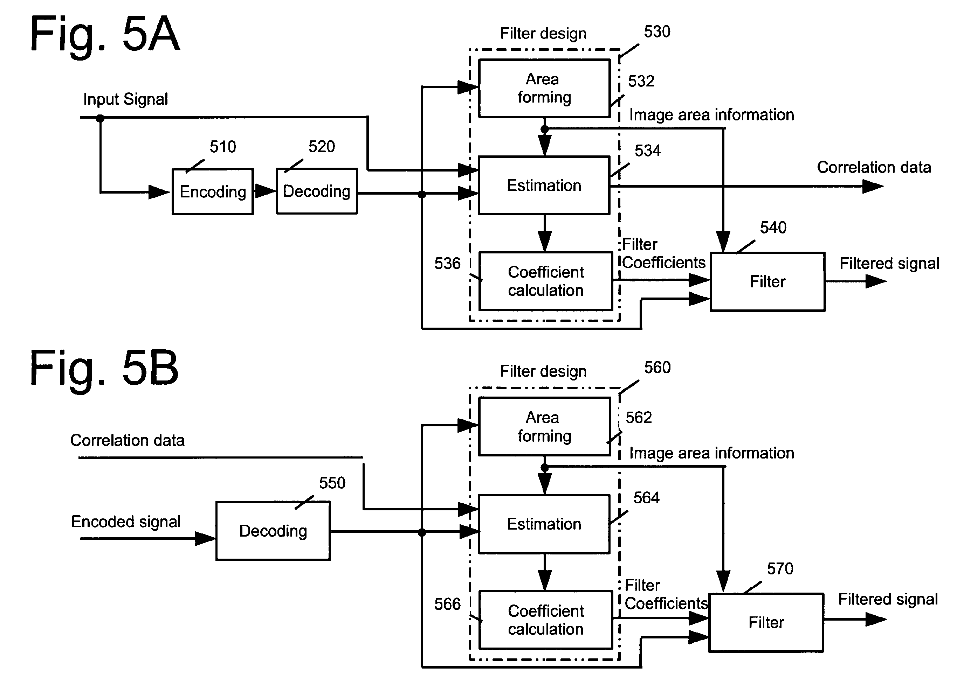

Figure 5A illustrates schematically an encoder in accordance with the present invention. A video signal is input to a video encoder 510. The video encoder 510 here may represent any single of the encoding steps employed in a hybrid video coding or their combination according to the domain in which the filtering is performed and/or the filter coefficients are estimated. In other words, in the context of the present invention, encoding 510 is any encoding step that results in an irreversible change of the encoded video signal with respect to the input video signal. Accordingly, the input signal in this context may be any data representing the video signal. For instance, if encoding 510 represents quantization and transformation step 110, the input signal corresponds to residuals (prediction error signal), i.e. to the difference between the original video signal and the prediction signal. The encoding 510 may also comprise a prediction, temporal 160 and/or spatial 170. In this case, the input signal corresponds to a video signal comprising image samples of video frames. Such input video signal may be in any format supported by the video encoder. Here, the format refers to a color space and a sampling resolution, the sampling resolution covering the arrangement and frequency of samples in space as well as the frame rate. The samples may include luminance values only for gray scale images, or a plurality of color components for color images.

After being encoded by the encoder 510, the resulting video data is decoded in a local decoder 520 still at the encoder side in order to obtain decoded video signal. The decoded video signal here refers to a video signal in the same domain as the input signal, i.e. inverse-quantized and inverse-transformed residuals, or reconstructed video samples, corresponding to the examples of input signal as described above. The input signal and the decoded signal are both input to an estimator 534 for estimating the correlation information necessary for calculating 536 the filter coefficients. The estimation is performed for an image area, i.e., for a part of the video frame. The image area is determined by an area forming unit 532. The three steps, namely area forming 532, correlation information estimation 534 and coefficient calculation 536, together constitute a filter design 530 in accordance with the present invention. The calculated filter coefficients are then used to filter 540 the determined image area. A part of the estimated correlation information is provided to the decoder side. Preferably, the provided part of the correlation information is a part which cannot be determined at the decoder side, a part that relies on knowledge of a signal that is only available at the encoder side. Here, the correlation information or data refers to any representation of second statistic moment related to the input signal and/or to the decoded signal, such as auto correlation, cross correlation, auto covariance, cross covariance. Depending on the format of the signal (input, decoded), this correlation data may have different form such as function, matrix, vector, value, etc. In general, the filter design 530, or any of its parts may be performed in a domain different from the domain in which the filtering is performed.

The area forming 532 is an essential part of the filter design. For the performance of filtering, the subdivision of image into the groups of basic image elements is essential, since the elements belonging to one group should ideally have similar statistics. The size of groups determines the granularity of the local adaptation. In accordance with the present invention, the segmentation of the image into groups may be either fixed or adaptive. In the case of a fixed segmentation, the final granularity is achieved if each group consists of a single image element. However, calculating the optimum filter coefficients for each image element is a rather complex task especially if performed at the decoder. Moreover, the side information to be signalized reduces the coding efficiency of the video encoding. Therefore, for images with a plurality of image elements having similar statistical characteristics in particular, it can be beneficial to form the image element groups out of a plurality of image elements. Due to the changing content of natural video sequences, an adaptive segmentation is advantageous. Here, the adaptive segmentation may either be signalized or derived in the same way at the encoder and at the decoder. Explicit segmentation which is coded and transmitted from the encoder to the decoder has the advantage of full scalability, meaning that the image elements may be assigned to a particular image element group arbitrarily.

In general, the image area may be determined in an arbitrary manner as a subset of basic picture elements, which may be single values of a pixel, blocks, macroblocks, etc. Such a subset is not necessarily continuous. The greatest flexibility of determining the image area is provided, if any subset of the image may be addressed. In order to inform the decoder side of the image area selected at the encoder, image area information thus has to be provided.

Such image area information may contain for example a pattern specifying for each basic image element, to which image area it belongs. However, any other descriptions are possible, such as defining a shape and size of the area by a set of predefined parameters. Another possibility is to segment the image by means of an object recognition algorithm such as clustering and to define the image areas in accordance with the objects. The image area information then may be signalized, or the segmentation may be performed in the same way at the decoder. It is an advantage to perform the image area determination within the decoded image so that both encoder and decoder side determine the image area in the same way based on the same input information. This input information may be any information contained in the transmitted encoded video signal and another video data associated therewith. Deriving the image area from the input data rather than from the additional side information reduces the signaling overhead and leads thus to higher coding efficiency. The performance of filtering does not necessarily suffer when the parameters for deriving the image areas are chosen in an appropriate way which means, in this context, in order to identify image areas with possibly stationary characteristics.

For example, motion vectors may be used to segment the image into different moving parts corresponding to different objects in the image, since it can be assumed that such objects have stationary or nearly stationary characteristics. Alternatively, the information about prediction type or the size of quantization step can be used for segmentation. In particular in encoders already implementing the selection of the encoding parameters according to rate-distortion optimization, these parameters are reliable indication of the content characteristics.

The segmentation of an image into image element groups may also be performed using parameters that can be derived at both encoder and decoder and that are not necessarily transmitted from encoder to decoder. For instance, statistical features of the image elements such as a local autocorrelation matrix may be used directly. Accordingly, the image elements may be subdivided into different groups based on the size of the local autocorrelation matrix at a certain position. Alternatively, any function of local autocorrelation matrix elements may be used to subdivide the image elements into groups. It may be beneficial also to combine a plurality of signalized video data parameters and/or parameters derived directly from the encoded video signal.

The estimation 534 obtains from image area forming unit 532 the determined image area or an information enabling determination of the image area. Additionally, it may use the input video signal as well as the encoded video signal for deriving statistic information controlling the design of the filter 536. In accordance with the present invention, the design of the filter is controlled by local correlation function. For each image area, a local correlation information is determined based on the encoded (and decoded) video signal. The same autocorrelation local correlation information may be derived 564 at the decoder side if the decoded image at both sides is the same, i.e. if the local decoder 520 at the encoder side and the decoder 550 at the decoder side work in the same way upon the same input signal (image area). Moreover, another correlation data is derived 534, based on the decoded video signal and on the input video signal. This information cannot be derived in the same way at the decoder side since at the decoder side, the input video signal is not known. Therefore, in accordance with the present invention, this data is signalized to the decoder side.

Figure 5B illustrates the decoder in accordance with the present invention. Encoded video signal is passed to a video decoder 550 and the decoded video signal is further passed to a filter design unit 560. In the decoded video signal, the image area forming unit 562 determines an image area. Additional image area information (not shown in the figure) may also be passed to the image area forming unit in order to determine the image area. First correlation data is obtained from the encoder side. After the determination of the image area, local correlation data (second correlation data) is estimated 564. The estimated correlation data is then passed to the coefficient calculation unit 566 for calculating the filter coefficients to be used in filtering 570 of the determined image area.

It is an advantage if the encoder and the decoder are matched, i.e., if their functional blocks work in the same way and operate upon the same signals. For example, if the local video decoder 520 at the encoder side and the video decoder 550 at the decoder side are the same and/or if the image area forming 532, the estimation 534 and the coefficient calculation 536 at the encoder matches the corresponding blocks 562, 564 and 566 at the decoder. However, this does not necessarily have to be the case. Moreover, the decoder according to the present invention may be in general applied also to a video signal encoded by a standard encoder such as an H.264/AVC based encoder, given that first correlation data is provided, which may be the case for the post filter design. Thus, a video encoder that encodes data, decoded by the decoder in accordance with the present invention, does not necessarily have to apply the filtering as applied at the decoder.

The common correlation information that can be derived at both encoder and decoder side is for example the auto correlation function based on the encoded (and decoded) image area. The correlation information available only to the encoder is for example based on cross correlation between the input video signal and the decoded video signal. The first and the second correlation information are then used to derive the filter coefficients 536. In the following, preferred embodiment of the present invention will be described, in which the filter coefficients are calculated as Wiener filter coefficients.

The input video signal of an image area is denoted $s_L$, wherein the subscript $L$ stands for "local". The signal $s_L$ is preferably a one-dimensional signal obtained by stacking the two-dimensional video signal in a vector. The image area $s_L'$ after encoding using a lossy compression method can be expressed as a sum of the original image signal $s_L$ and the noise $n_L$ representing the degradation resulting from the encoding/compression such as quantization noise. In order to reduce the amount of noise $n_L$, a Wiener filter is applied to the signal $s_L'$, resulting in the filtered signal $s_L''$. In order to obtain the filter coefficients of the Wiener filter, first the autocorrelation matrix of the signal $s_L'$ is determined. The autocorrelation matrix $R_L$ of size $M \times M$ may be estimated by using realizations from the spatial and/or temporal neighborhood of the current image area $s_L'$. Furthermore, cross correlation vector between the encoded (and decoded) signal $s_L'$ to be filtered and the desired signal (original signal) $s_L$ has to be estimated in order to calculate the coefficients of the locally adaptive Wiener filter. These coefficients are determined by solving the system of Wiener-Hopf equations and the solution has the form of

$$w_L = R_L^{-1} \cdot p_L,$$

where $R_L^{-1}$ denotes the inverse of the local autocorrelation matrix $R_L$. Parameter $M$ is the order of the Wiener filter.

The autocorrelation matrix $R_L$ can be determined at both encoder and decoder since it only uses the noisy signal as $s_L'$ for calculation. On the other hand, the local cross correlation vector $p_L$ between the signal to be filtered $s_L'$ and the original signal $s_L$ can only be calculated at the encoder, since the knowledge of the original signal $s_L$ is necessary.

In accordance with an embodiment of the present invention, after being derived at the encoder, the local cross correlation vector $p_L$ is encoded and provided together with the encoded video data to the decoder side for each image area for which the autocorrelation matrix is determined. This embodiment provides the highest adaptability to the image characteristics and consequently, the highest quality of the filtered image. However, the signaling overhead may reduce the coding efficiency even in cases where the local cross correlation vector varies slowly and the overhead increases considerably as the size of an image area decreases.

Alternatively, $K$ local cross correlation vectors $p_{L,k}$, $k=1..., K,$ are provided to the decoder side. For each image area at the decoder, then one of the $K$ local cross correlation vectors $p_{L,k}$ is selected, whereas the selection is derived, for instance, from the local autocorrelation matrix $R_L$, which is estimated for each image area separately. For this purpose, again, a value of a particular element of the local autocorrelation matrix or any function of its element(s) may be used. For instance, each of the $K$ cross correlation vectors may be associated with an interval of values of a predetermined element of the auto correlation matrix. However, the one of the $K$ cross correlation vectors may also be chosen based on information signalized as a part of the video data (for instance the prediction type, motion information, quantization step, etc. similarly to the parameters for determining the image area). The choice of the one of the $K$ correlation vectors may also be signalized explicitly.

According to another embodiment of the present invention, only one global cross correlation vector $p$ is provided to the decoder side. For each image area, the Wiener filter is determined by using the thus transmitted global cross correlation vector $p$ and the locally estimated autocorrelation matrix $R_L$. The coefficients of the Wiener filter are then given by

$$w_L = R_L^{-1} \cdot p.$$

Providing the global cross correlation vector only reduced the amount of side information to be sent. At the same time, certain local adaptability is achieved by calculating the autocorrelation matrix locally.

In accordance with a preferred embodiment of the present invention, however, each local cross correlation vector $p_L$ is separated into two parts

$$p_L = p_{L,s'} + p_n,$$

wherein the first part $p_{L,s'}$ depends only on the statistic of the local signal $s_L'$ to be filtered and the second part $p_n$ depends only on the statistic of the added noise signal $n$. Such subdivision of the local cross correlation vector $p_L$ is possible under the following assumptions:

1) correlation between the noise signal and the input signal is zero:

$$E\big[s_L(x) \cdot n_L(x)\big] = 0,$$

$$E\big[s_L(x-1) \cdot n_L(x)\big] = 0.$$

2) the statistic of the added noise is independent of the local image area:

$$E\big[n_L^2(x)\big] = E\big[n^2(x)\big],$$

$$E\big[n_L(x) \cdot n_L(x-1)\big] = E\big[n(x) \cdot n(x-1)\big].$$

Here, $s_L(x)$ denotes an element of the stochastic local input signal vector $sL = [s_L(x), s_L(x-1), \dots , s_L(x-M+1)]$, $s_L'(x)$ denotes an element of the stochastic local noisy signal vector $s_L' = [s_L'(x), s_L'(x-1),\dots, s_L'(x-M+1)]$, $n(x)$ denotes an element of the stochastic noise vector $n = [n(x), n(x-1), \dots , n(x-M+1)]$, $n_L(x)$ denotes an element of the stochastic local noise vector $n_L = [n_L(x), n_L(x-1), \dots , n_L(x-M+1)]$, and operator $E$ denotes expectation.

The local filter coefficients $W_{1,L}$ and $W_{2,L}$ of the Wiener filter with order $M = 2$ are calculated using the Wiener-Hopf equation:

$$
\begin{bmatrix} E\big[s_L(x) \cdot s_L'(x)\big] \\ E\big[s_L(x) \cdot s_L'(x-1)\big] \end{bmatrix} =
\begin{bmatrix} E\big[s_L'(x) \cdot s_L'(x)\big] & E\big[s_L'(x) \cdot s_L'(x-1)\big] \\ E\big[s_L'(x) \cdot s_L'(x-1)\big] & E\big[s_L'(x-1) \cdot s_L'(x-1)\big] \end{bmatrix} \cdot
\begin{bmatrix} w_{1,L} \\ w_{2,L} \end{bmatrix}.
$$

After substituting the equation $s_L(x) = s_L'(x) - n_L(x)$, the first element of the local cross correlation vector $p_L$ can be written as

$$E\big[s_L(x) \cdot s_L'(x)\big] = E\big[s_L'(x) \cdot s_L'(x)\big] - E\big[n_L^2(x)\big] - E\big[s_L(x) \cdot n_L(x)\big].$$

Similarly, the second element of the local cross correlation vector $p_L$ is given by

$$E\big[s_L(x) \cdot s_L'(x-1)\big] = E\big[s_L'(x) \cdot s_L'(x-1)\big] - E\big[n_L(x) \cdot n_L(x-1)\big] - E\big[s_L(x-1) \cdot n_L(x)\big].$$

Considering the above-mentioned assumptions, the local cross correlation vector $p_L$ can finally be written as

$$p_L = \underbrace{\begin{bmatrix} E[s'_L(x) \cdot s'_L(x)] \\ E[s'_L(x) \cdot s'_L(x-1)] \end{bmatrix}}_{p_{L,s'}} + \underbrace{\begin{bmatrix} -E[n^2(x)] \\ -E[n(x) \cdot n(x-1)] \end{bmatrix}}_{p_n}.$$

The first part $p_{L,s'}$ depends only on the local corrupted image signal $s_L'$ and can thus be determined at both encoder side and decoder side. The second part $p_{L,n}$ depends only on the added noise signal. This part is only known by the encoder side but not by the decoder side. Therefore, this part has to be provided together with the encoded data to the decoder.

Since it is assumed that the statistics of the added noise is independent of the local image area, this information does not necessarily have to be provided for each image area. Preferably, the part of the cross correlation vector is provided only once per image. By the use of the provided statistics of the added noise and the measured local autocorrelation matrix as well as the corresponding part of cross correlation vector, related to the decoded signal only, as described above, the encoder and the decoder can determine the optimal coefficients of the Wiener filter for each image area. Using these optimal coefficients, each image area can be filtered.

For the cases when the second condition, namely the statistics of the added noise being independent of the local image area, does not apply, it may be an advantage to estimate and signalize the noise auto correlation more frequently. Then, each local cross correlation vector $p_L$ is separated into two parts

$$p_L = p_{L,s'} + p_{L,n},$$

where also the auto correlation of noise $p_{L,n}$ is local.

The assumption of zero correlation between noise and input signal, as well, is not always fulfilled, especially in the case of an image signal with low variance and of coarse quantization (corresponding to high quantization parameter values), since quantization reduces the variance of image signal. Consequently, the noise signal may represent the parts of the image signal itself and thus may be highly correlated therewith. Nevertheless, the zero correlation assumption becomes true for image signal with high variance and offine quantization, which is associated with a high signal to noise ratio. A further improvement in the calculation of local Wiener filter coefficients is achieved if the zero correlation between noise and input signal is not assumed, i.e. the values of the two terms $E[s_L(x) \cdot n_L(x)]$ and $E[s_L(x-1) \cdot n_L(x)]$ are also estimated. After being estimated, they may be provided to the decoder side. However, preferably, the two terms are estimated locally at the encoder and at the decoder without exchanging extra side information. This can be performed, for instance, based on the statistics of the local image signal to be filtered such as variance and by the transmitted quantization information such as the quantization parameter in combination with the quantization weighting matrices. For this estimation, further parameters may also be transmitted from the encoder to the decoder. Such parameters may define, for example, a function for the two terms dependent on the variance of the local image signal to be filtered. It may be, but does not need to be, a linear function.

In accordance with a further embodiment of the present invention, the auto correlation function of the noise $p_n$ (either local or global) is estimated by using the known quantization step sizes, which are defined by the quantization parameter in combination with weighting matrices, and the applied inverse transforms. For the case of a one dimensional signal $s'_L(x)$ and $M = 2$, the local filter coefficients leading to the local minimum mean squared error can be determined with a known $p_n$ by

$$\begin{bmatrix} w_{1,L} \\ w_{2,L} \end{bmatrix} = \begin{bmatrix} E[s'_L(x) \cdot s'_L(x)] & E[s'_L(x) \cdot s'_L(x-1)] \\ E[s'_L(x) \cdot s'_L(x-1)] & E[s'_L(x-1) \cdot s'_L(x-1)] \end{bmatrix}^{-1} \cdot \left( \begin{bmatrix} E[s'_L(x) \cdot s'_L(x)] \\ E[s'_L(x) \cdot s'_L(x-1)] \end{bmatrix} + p_n \right).$$

Accordingly, the local filter coefficients may be calculated at the encoder side and at the decoder side without exchanging the side information. This can be beneficially used alternately with calculating the filter coefficients based on the provided side information, if the side information is not provided.

According to a preferred embodiment of the present invention, the encoder and the decoder in accordance with the present invention are based on H.264/AVC standard, i.e. the encoding and the decoding is based on a hybrid video coding as described in the invention background section. Such encoder and decoder may be, for instance, a standardized enhancement of the present H.264/AVC standard or any future video coding standard, or any proprietary version based on the principles of H.264/AVC encoding and decoding.

H.264/AVC employs two different inverse transforms for application to blocks of different sizes: a 4 x 4 and an 8 x 8 inverse transform. Since the inverse transforms define the auto correlation function of the noise, it may also be an advantage to estimate and possibly also to provide individual auto correlation vectors of the noise signal (or the cross-terms of the cross correlation vector, or the whole cross correlation vector). One such individual auto correlation vector is then used for the picture elements that are processed with the 4 x 4 transform and the other one is used for the picture elements that are processed with the 8 x 8 transform.

It may also be an advantage to provide and/or estimate individual auto correlation vectors of the noise signal for Intra-coded and Inter-coded picture elements, which may be blocks, macroblocks or groups of either. The determination of an image area may also take into account the type of picture elements and a rule may be applied that an image area contains only picture element of the same type (Inter/Intra, I/P/B). A further refinement can be achieved by providing and/or estimating individual auto correlation vectors of the noise signal for the various block sizes that are used in the Intra prediction and in the Inter prediction.

Another advantageous example is providing and/or estimating individual auto correlation vectors of the noise signal for picture elements that are associated with large quantized prediction errors and small quantized prediction errors. For instance, there may be a plurality of intervals of (mean) values of the quantized prediction errors, and for each interval an individual correlation vector of the noise signal may be provided.

Yet another advantageous example is providing and/or estimating individual auto correlation vectors of the noise signal depending on the associated motion vector(s) and the surrounding motion vectors. A large difference of the associated motion vector and the surrounding ones is an indicator for a local object. At local objects, generally a large prediction error occurs, resulting in a large quantization error if the quantization is coarse.

It should be noted that the information to be provided as described in all above examples does not need to be the auto correlation vector of noise. It may be the entire cross correlation vector, or its arbitrary part(s). In addition, the number of provided elements may be signalized together with the elements of the correlation data.

Providing the side information (cross correlation vector or its part) for calculating the filter coefficients from the encoder side for the decoder side is not limited to the examples described above. The frequency of providing the side information does not need to be regular. Moreover, the frequency of estimating and providing the side information does not need to be the same. In accordance with yet another embodiment of the present invention, the side information is estimated for each image area. The encoder further comprises a rate-distortion optimization unit capable of deciding if sending the side information would improve the quality of filtered image considering the rate necessary for transmission/storing thereof. The rate-distortion optimization unit may further decide which parts of the cross correlation vector shall be provided, i.e. whether sending of parts containing cross-terms is necessary or whether the part related to noise auto correlation would be sufficient. This decision, again, can be based on a rate-distortion optimization, which may be performed by comparing the results of filtering using coefficients calculated based on a cross correlation vector estimated in various manners (for example the part related to noise only, cross-terms, cross correlation vector common for the whole image, cross correlation vector out of a predefined set of cross correlation vectors, etc.). The rate-distortion optimization unit may be a part of a rate-distortion optimization unit of an encoder and may in addition perform optimization of various other encoding parameters apart from filtering, such as prediction type, quantization step, etc.

Alternatively, the decision on whether to send or not the side information may be made based on the statistics of the noise or on the statistics of the noise with respect to the signal. For instance, a value of an element of the cross correlation vector or its part may be compared to a threshold and based upon the comparison, the decision may be made. Preferably, the decision is made based on the change of the statistics between different image areas. Sending the first correlation data less frequently than estimating the local correlation data based on the decoded video signal only allows for improving the coding efficiency in comparison with the case where filter coefficients would be sent per image area. At the same time, the local estimation of the correlation data related to the decoded video signal only enables adapting to local characteristics of the video image and improve the performance of filtering in case of non-stationarity of the video signal.

The filter design as described above can be applied, for instance in H.264/AVC, to an interpolation filter, to a post filter, to the deblocking filter or any other filter such as a loop filter, that may be introduced in future into the standard or employed without being standardized.

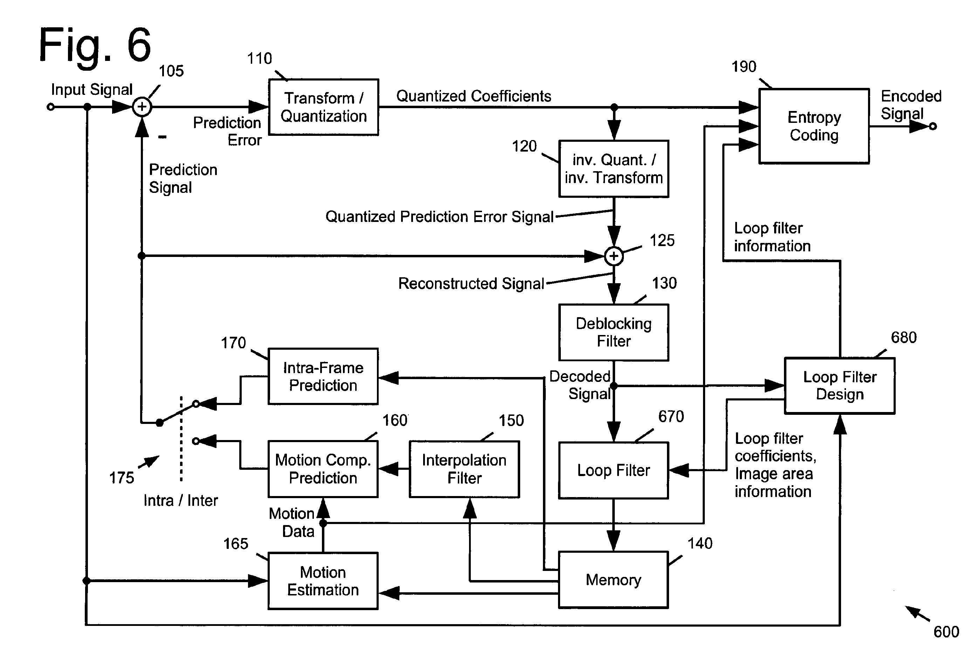

Figure 6 illustrates an encoder 600 based on H.264/AVC video coding standard and modified in accordance with an embodiment of the present invention. Instead of the post filter design unit 180, a loop filter design unit 680 is included, which works similar to filter design unit 530 as described with reference to Figure 5A and includes an image area forming unit 532, an estimator 534, and a coefficient calculation unit 536. Based on the input signal and the decoded signal, the filter coefficients are calculated and passed to a loop filter 670. The loop filter design unit 860 also passes the information about the image area segmentation to the local loop filter 670. The loop-filtered signal is stored in the memory 140 and utilized as a reference for prediction of the later encoded images. In this example, the decoded video signal and the input video signal used for the loop filter design are in the pixel domain, i.e., represent the pixel values of the video signal. However, the loop filter 680 and/or its design unit 670 may also work with the prediction error signal and correspondingly with the quantized prediction error signal. It should be noted that even if the loop filter 670 is applied instead of the post filter 280 in this example, in general it may be an advantage to keep also the post filter.

The loop filter information provided for the decoder side in this embodiment comprises the first correlation data determined by the estimator 534 of the loop filter design unit 680. As described above, this first correlation data is based on both the input video signal and the decoded video signal and may comprise, for instance, the cross correlation vector or its parts such as auto correlation of the noise, noise being defined as a difference between said input video signal and the decoded video signal. The loop filter information here is entropy encoded 190 in order to reduce the overhead necessary for its signaling. The entropy code used for its encoding does not necessarily correspond to any of entropy codes used in H.264/AVC to encode the information elements related to encoded video signal or the side information necessary for its decoding. It may be any variable length codes such as an integer code like a Golomb code, an exponential Golomb code, unitary code, an Elias code, etc., the assignment of codewords to values of the correlation data may be reordered in accordance with the probability of their occurrence. Specially designed or context adaptive entropy codes such as Huffman code, Shannon-Fano code or arithmetic codes may also be used. Alternatively, the correlation data may be transmitted using a fixed length code.

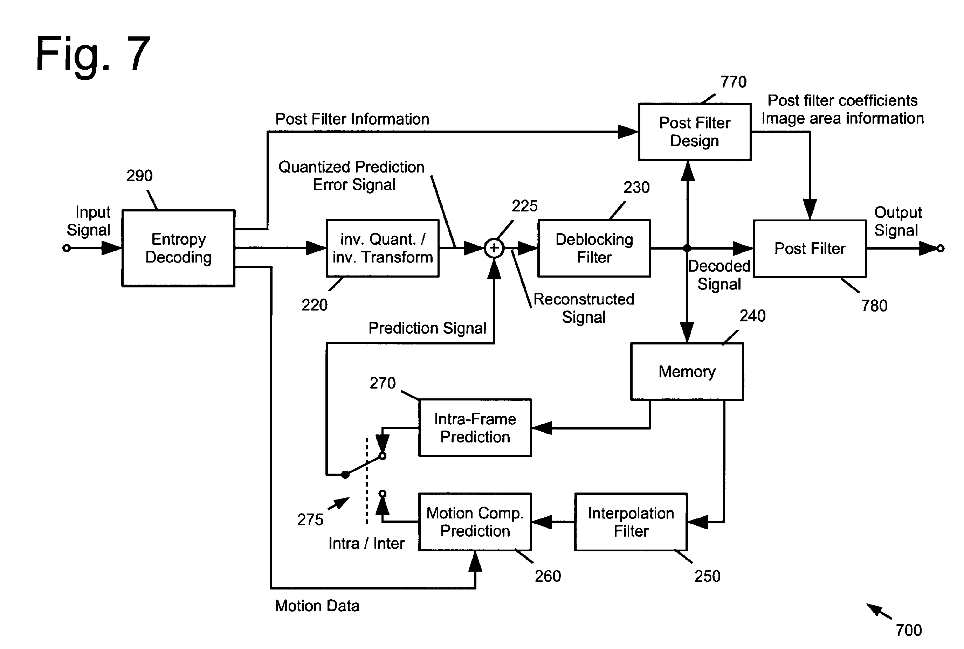

Figure 7 shows a block illustration of a decoder 700 with post filtering in accordance with another embodiment of the present invention. A post filter design unit 770 works in a similar way as the filter design unit 560 described with reference to Figure 5B and includes an image area forming unit 562, an estimator 564 and a coefficient calculating unit 566. Based on the signalized post filter information comprising the first correlation data (and possibly image area information) and based on the decoded video signal, post filter design unit 770 determines the image area, estimates the local correlation data and based thereon calculates the filter coefficients, which are then provided to the post filter 780 together with the image area information for local filtering. The image area information signalizes the image area the filter coefficients shall be applied to.

Alternatively and correspondingly to the encoder described with reference to Figure 6, the post filter 780 at the decoder 700 may be replaced by a loop filter similar to the loop filter 670 at the encoder 600 using a loop filter design unit similar to the loop filter design unit 680 for designing the new loop filter as a locally adaptive loop filter. Such loop filter may also be employed in addition rather than alternatively to the post filter 780.

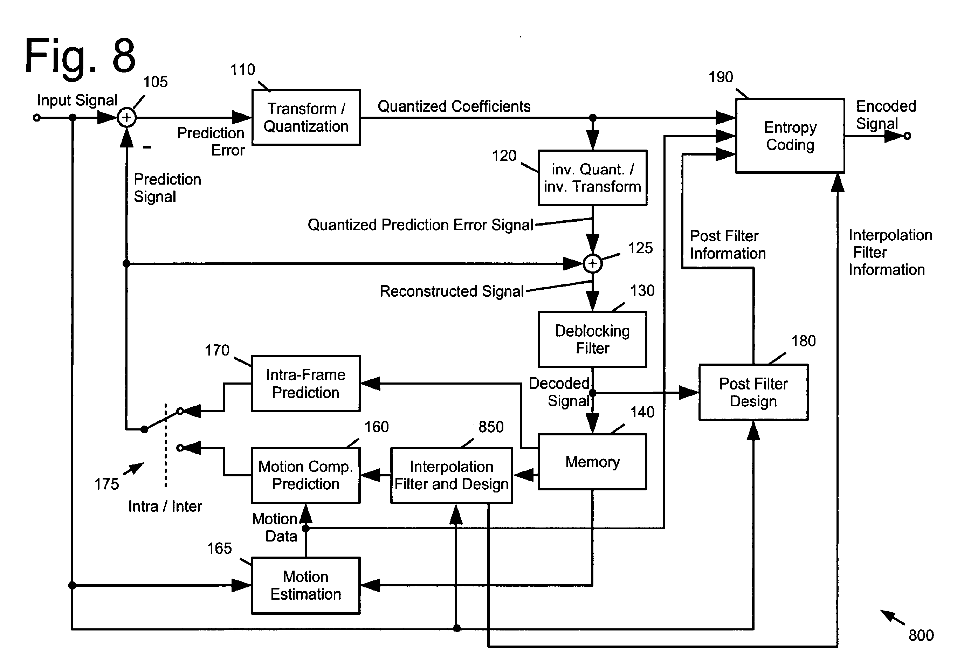

In accordance with a further embodiment of the present invention, an encoder 800 and a decoder 900 with an interpolation filter are provided. Figure 8 illustrates the encoder 800 comprising an interpolation filter and design unit 850. The interpolation design unit works in a similar way as and has the similar structure to the filter design unit 530 described with reference to Figure 5A. The locally determined correlation data are used for filter design and a part of the correlation data is passed to an entropy encoder 190 to be provided for the decoder side. Again, the entropy code used for encoding the correlation data may be similar to the entropy code used for H.264/AVC data or to the post filter information. However, it may be an advantage to design the entropy code adapted to the characteristics of this data separately.

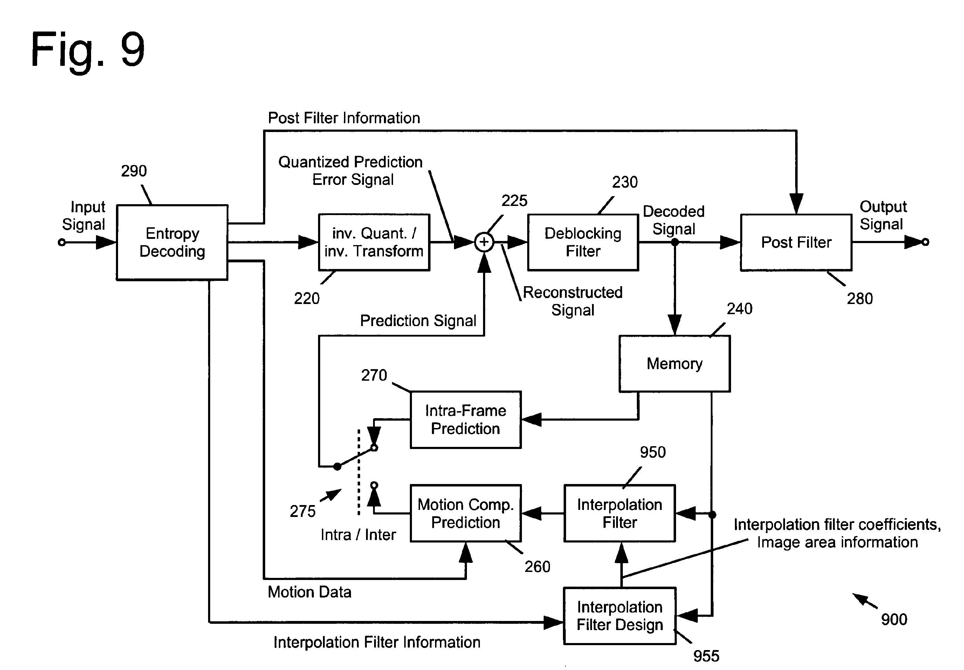

Figure 9 illustrates the decoder 900 with an interpolation filter design unit 955 working in a similar way as the filter design unit 560 described with reference to Figure 5B. Based on the interpolation filter information comprising the first correlation information and based on the decoded video signal data from the memory 240, the interpolation filter design unit 955 determines the local filter coefficients and provides them, together with the image area information, to an interpolation filter 950, which is used to filter the decoded local (image area) video signal from memory 240.

The deblocking filter 130 at the encoder as well as the deblocking filter 230 at the decoder may also be employed in accordance with the present invention, i.e. adaptively to the local image characteristics and controlled by the correlation information.

Both embodiments of the encoder 600, 800 and the decoder 700, 900, described with reference to Figures 6, 7, 8 and 9 may be combined and an encoder and decoder with locally adaptive loop filter and/or post filter as well as interpolation filter may be employed. A common filter design unit may then be used to perform similar operations (area forming, estimation, coefficients calculation) based on different input data.

Figure 10 illustrates a system for transferring a video signal from an encoder side to a decoder side. An input video signal is encoded by an encoder 1001 and provided to a channel 1002. The encoder 1001 is an encoder in accordance with any of the embodiments of the present invention as described above. The channel 1002 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1002 or an application for transferring the encoded video signal into the storage. The encoded video signal is then obtained from the channel 1002 by a decoder 1003. The decoder 1003 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described.

Furthermore the concept of the invention may be also readily used in the enhancements of H.264/AVC coding currently discussed by the JVT.

Summarizing, the present invention provides a method for encoding, a method for decoding, an apparatus for encoding and an apparatus for decoding a video signal using locally adaptive filtering controlled by local correlation data. First correlation data is estimated at the encoder and provided to the decoder side. The estimation is performed based on the input video signal and on the decoded video signal. Moreover, an image area, being a part of a video frame is determined and second correlation data is estimated for the determined image area, based on the decoded video signal. The first and the second correlation data are then employed for calculation of the filter coefficients. In accordance with the locally determined filter coefficients, the image area is filtered. Encoding and decoding according to the present invention is thus capable of adapting the filtering to the local characteristics of the video images and improves thus the performance of the filtering. As the first correlation data does not need to be submitted for each image area, the coding efficiency is also improved.

**Claims**

1.   A method for encoding an input video signal including at least one video frame, the method comprising the steps of:

   encoding (510) an input video signal;
   decoding (520) the encoded video signal;
   determining (534) first correlation data based on the input video signal and the decoded video signal for calculating filter coefficients; and
   providing the first correlation data to a decoder side,

   **characterized by** the steps of
   determining (532) an image area (410) as a part of a video frame of the decoded video signal;
   estimating (534) second correlation data for said determined image area based on the decoded video signal;
   filtering (540) the determined image area; and
   calculating (536) filter coefficients for the filtering of the determined image area, the filter coefficients being calculated based on the first correlation data and on the second correlation data.

2.   A method for decoding an encoded video signal including at least one video frame, the method comprising the steps of:

   decoding (550) an encoded video signal; and

obtaining first correlation data determined at the encoder side based on the video signal processed by the encoder;

**characterized by** the steps of
determining (562) an image area as a part of a video frame of the decoded video signal;
estimating (564) second correlation data for said determined image area based on the decoded video signal;
filtering (570) the determined image area; and
calculating (566) filter coefficients for the filtering of the determined image area, the filter coefficients being calculated based on the first correlation data and on the second correlation data.

3. A method according to any of claims 1 to 2 wherein
the first correlation data include an estimate of a cross-correlation vector between the input video signal and the decoded video signal or a part of the cross-correlation vector; and
the second correlation data includes autocorrelation matrix of the decoded video signal.

4. A method according to claim 3 wherein
the first correlation data includes an estimate of a first part of the cross correlation vector, said first part being estimated (534) based on the difference between a video signal prior to encoding (510) and the decoded video signal, in particular as auto correlation of quantization noise; and
the second correlation data further includes a second part of the cross correlation vector, said second part being estimated (534, 564) based on the decoded video signal.

5. A method according to any of claims 1 to 4 wherein the first correlation data is provided less frequently than the second correlation data is estimated, in particular per video frame.

6. A method according to any of claims 1 to 5 wherein the image area is determined (532, 562) based on information signalized together with the encoded video signal such as prediction type, motion vectors and/or quantization step or based on information derived based on the decoded video signal such as correlation.

7. A method according to any of claims 1 to 6 wherein the first correlation data and the second correlation data are used to calculate (536, 566) the coefficients of at least one of a loop filter, a post filter, an interpolation filter and a deblocking filter.

8. An apparatus for encoding an input video signal including at least one video frame, comprising:

   a video encoder (510) for encoding an input video signal;
   a video decoder (520) for decoding the encoded video signal;
   a first estimator (534) for determining first correlation data based on the input video signal and the decoded video signal for calculating filter coefficients;

   wherein the apparatus is capable of providing the first correlation data to a decoder side,
   **characterized by**
   an image area forming unit (532) for determining an image area (410) as a part of a video frame of the decoded video signal;
   a second estimator (534) for estimating second correlation data for said determined image area based on the decoded video signal;
   a filter (540) for filtering the determined image area; and
   a coefficient calculating unit (536) for calculating filter coefficients for the filtering of the determined image area, the filter coefficients being calculated based on the first correlation data and on the second correlation data.

9. An apparatus for decoding an encoded video signal including at least one video frame, comprising:

   a video decoder (550) for decoding an encoded video signal;

   wherein the apparatus is capable of obtaining first correlation data determined at the encoder side based on the video signal processed by the encoder,
   **characterized by**
   an image area forming unit (562) for determining an image area as a part of a video frame of the decoded video signal;

an estimator (564) for estimating second correlation data for said determined image area based on the decoded video signal;
a filter (570) for filtering the determined image area; and
a coefficient calculating unit (566) for calculating filter coefficients for the filtering of the determined image area, the filter coefficients being calculated based on the first correlation data and on the second correlation data.

10. An apparatus according to claim 8 or 9 wherein
the first correlation data includes an estimate of a cross-correlation vector between the input video signal and the decoded video signal or a part of the cross correlation vector; and
the second correlation data includes autocorrelation matrix of the decoded video signal.

11. An apparatus according to claim 10 wherein
the first correlation data includes an estimate of a first part of the cross correlation vector, said first part being estimated (534) based on the difference between a video signal prior to encoding (510) and the decoded video signal, in particular as auto correlation of quantization noise; and
the second correlation data further includes a second part of the cross correlation vector, said second part being estimated (534, 564) based on the decoded video signal..

12. An apparatus according to any of claims 8 to 11 wherein the first correlation data is provided less frequently than the second correlation data is estimated, in particular per video frame.

13. An apparatus according to any of claims 8 to 12 wherein the image area forming unit (532, 562) is capable of determining the image area based on information signalized together with the video signal such as prediction type, motion vectors, and/or quantization step or on information derived based on the decoded video signal such as correlation.

14. An apparatus according to any of claims 8 to 13
wherein the filter coefficient calculating unit (536, 566) is adapted to use the first correlation data and the second correlation data to calculate the coefficients of at least one of a loop filter, a post filter, an interpolation filter and a deblocking filter.

15. A system for transferring video signal from an encoder side to a decoder side,
the encoder (1001) according to claim 8;
a channel (1002) for storing or transmitting the encoded video signal; and
the decoder (1003) according to claim 9.

# Fig. 1

# Fig. 2

EP 2 161 936 A1

# Fig. 3

$n$

$s$ → (+) → $s'$ → [ Wiener Filter ] → $s''$

300

EP 2 161 936 A1

# Fig. 10

Input Signal → [ Encoder ] → [ Channel ] → [ Decoder ] →

1001    1002    1003

Encoder side    Decoder side

# Fig. 4A

401      400

# Fig. 4B

410c      400      410d

410b

410a

EP 2 161 936 A1

# Fig. 5A

Input Signal

Encoding 510

Decoding 520

Filter design 530

Area forming 532

Image area information

Estimation 534

Correlation data

Coefficient calculation 536

Filter Coefficients

Filter 540

Filtered signal

# Fig. 5B

Encoded signal

Decoding 550

Correlation data

Filter design 560

Area forming 562

Image area information

Estimation 564

Coefficient calculation 566

Filter Coefficients

Filter 570

Filtered signal

Fig. 6

# Fig. 7

EP 2 161 936 A1

Fig. 8

# Fig. 9

Post Filter Information

Input Signal → Entropy Decoding (290)

Quantized Prediction Error Signal

inv. Quant. / inv. Transform (220)

225 ⊕

Deblocking Filter (230)

Decoded Signal

Post Filter (280)

Output Signal

Reconstructed Signal

Prediction Signal

Intra-Frame Prediction (270)

Memory (240)

275 Intra / Inter

Motion Comp. Prediction (260)

Interpolation Filter (950)

Interpolation filter coefficients, Image area information

Motion Data

Interpolation Filter Design (955)

Interpolation Filter Information

900

EP 2 161 936 A1

Europäisches
Patentamt

European
Patent Office

Office européen
des brevets

## EUROPEAN SEARCH REPORT

Application Number

EP 08 01 5661

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 841 230 A (MATSUSHITA ELECTRIC IND CO LTD [JP]) 3 October 2007 (2007-10-03) * paragraph [0027] * * paragraph [0055] - paragraph [0057] * * figures 3,5,7,9 * | 1-15 | INV. H04N7/26 H04N7/50 |
| X | WO 2007/111292 A (MATSUSHITA ELECTRIC IND CO LTD [JP]; WITTMANN STEFFEN; WEDI THOMAS) 4 October 2007 (2007-10-04) * abstract * & EP 2 001 239 A (PANASONIC CORP [JP]) 10 December 2008 (2008-12-10) * paragraph [0042] - paragraph [0055] * | 1-15 | |
| X | EP 1 944 974 A (MATSUSHITA ELECTRIC IND CO LTD [JP]) 16 July 2008 (2008-07-16) * paragraphs [0024], [0062] * | 1-15 | |
| X | EP 1 845 729 A (MATSUSHITA ELECTRIC IND CO LTD [JP]) 17 October 2007 (2007-10-17) * paragraph [0067] - paragraph [0079] * | 1-15 | |
| A | WO 2008/075247 A (KONINKL PHILIPS ELECTRONICS NV [NL]; ZUO FEI [NL]; DE WAELE STIJN [NL]) 26 June 2008 (2008-06-26) * page 2, line 3 - page 3, line 8 * | 1-15 | TECHNICAL FIELDS SEARCHED (IPC) H04N |
| A | MUSMANN H G ET AL: "Motion- and aliasing-compensated prediction for hybrid video coding" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 577-586, XP011099250 ISSN: 1051-8215 * the whole document * | 1-15 | |

-/--

The present search report has been drawn up for all claims

| Place of search | Date of completion of the search | Examiner |
|---|---|---|
| Munich | 11 May 2009 | Fassnacht, Carola |

EPO FORM 1503 03.82 (P04C01)

**Europäisches Patentamt**
**European Patent Office**
**Office européen des brevets**

# EUROPEAN SEARCH REPORT

Application Number

EP 08 01 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WERNER O: "Drift analysis and drift reduction for multiresolution hybrid video coding" SIGNAL PROCESSING. IMAGE COMMUNICATION, ELSEVIER SCIENCE PUBLISHERS, AMSTERDAM, NL, vol. 8, no. 5, 1 July 1996 (1996-07-01), pages 387-409, XP004047049 ISSN: 0923-5965 * the whole document * | 1-15 | |
| A | WEDI THOMAS: "Advanced motion compensated prediction methods" ITU-T VIDEO CODING EXPERTS GROUP (ITU-T SG16 Q.6), XX, XX, 18 October 2003 (2003-10-18), pages 1-8, XP002454495 * the whole document * | 1-15 | |
| E | EP 2 051 524 A (PANASONIC CORP [JP]) 22 April 2009 (2009-04-22) * paragraph [0029] - paragraph [0049] * | 1,2,8,9, 15 | TECHNICAL FIELDS SEARCHED (IPC) |

The present search report has been drawn up for all claims

| Place of search | Date of completion of the search | Examiner |
|---|---|---|
| Munich | 11 May 2009 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 5661

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2009

| Patent document cited in search report | | Publication date | Patent family member(s) | | Publication date |
|---|---|---|---|---|---|
| EP 1841230 | A | 03-10-2007 | CN | 101411201 A | 15-04-2009 |
| WO 2007111292 | A | 04-10-2007 | EP 2001239 A2<br>KR 20090003272 A | | 10-12-2008<br>09-01-2009 |
| EP 2001239 | A | 10-12-2008 | WO 2007111292 A1<br>KR 20090003272 A | | 04-10-2007<br>09-01-2009 |
| EP 1944974 | A | 16-07-2008 | WO 2008084745 A1 | | 17-07-2008 |
| EP 1845729 | A | 17-10-2007 | NONE | | |
| WO 2008075247 | A | 26-06-2008 | NONE | | |
| EP 2051524 | A | 22-04-2009 | WO 2009050889 A1 | | 23-04-2009 |

EPO FORM P0459

For more details about this annex : see Official Journal of the European Patent Office, No. 12/82

**EP 2 161 936 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. Wittmann ; T. Wedi.** Separable adaptive interpolation filter. *ITU-T Q.6/SG16, doc. T05-SG 16-C-0219,* June 2007

- **S. Haykin.** Adaptive Filter Theory. *Prentice Hall Information and System Sciences Series,* 2002